# EUROPEAN PATENT SPECIFICATION

(11) **EP 1 132 248 B1**
(45) Date of publication and mention of the grant of the patent: **01.02.2006**
(21) Application number: 01104841.0
(22) Date of filing: 28.02.2001
(51) Int. Cl.: B60K 15/067, B65D 85/68, B62D 21/16, B60R 9/055, B60R 11/00

(54) **Suspension arrangement for a container**
Aufhängevorrichtung für einen Tank
Dispositif de suspension pour récipient

(30) Priority: 07.03.2000 DK 200000365
(43) Date of publication of application: 12.09.2001
(73) Proprietor: Roge, Torben Jacob, 9670 Logstor (DK); Sorensen, Poul Ole, 9530 Stovring (DK)
(72) Inventor: Roge, Torben Jacob, 9670 Logstor (DK); Sorensen, Poul Ole, 9530 Stovring (DK)
(74) Representative: Nielsen, Leif

(56) References cited:
- DE-A- 3 445 427
- DE-U- 9 406 777
- US-A- 1 797 873
- US-A- 4 846 499

## Description

The present invention concerns a suspension arrangement for suspending a container on a side member in a vehicle, preferably a lorry, the arrangement comprising a largely vertical support member mounted on the side member and including means for supporting the container. Such a suspension arrangement is known from DE-U-9 406 777.

Previously, containers in the form of fuel tanks, tool boxes, oil tanks, water tanks and the like have been disposed by unilateral suspension on the side member of a lorry under the platform body of the lorry.

In these arrangements according to prior art, the container has been fastened according to two different principles.

According to a first principle, the supporting means are formed by using an L-shaped bracket which is screw bolted on the side member via the vertical leg of the L thus constituting a vertical support member. The container is disposed upon the horizontal leg of the L. In order to have required strength, this L-shaped bracket has a relatively great height of between 5 and 10 cm. This causes a part of the space available under the platform of the lorry to be occupied by the horizontal leg of the L-shaped bracket resulting in less useful volume in the tank. This is a drawback.

According to another principle, a vertical support member in the shape of a U-section is screwed onto the side member. In this embodiment, a flat bar, which is welded onto the tank, is screwed on the U-shaped section at the top, and a plate is welded into the U-section at the bottom for supporting the tank at bottom. With this solution, a better utilisation of the space under the platform body is achieved so that the tank may have greater volume. However, in this system bolt extending all the way through the flat bars welded on the tank and through the plates welded on the U-section are used. This causes the mounting to be very difficult as the holes in the two plates in the U-section and the holes in the flat bars are to fit together by mounting. Even if close tolerances have been attained, mounting is still very difficult.

It is the purpose of the present invention to indicate a solution relieving these problems by providing an arrangement which in a simple way enables mounting of a container which may have a large effective volume in the space available under platform, or the like, resting on the side members of the vehicle.

According to the present invention, this is achieved with an arrangement having the features of claim 1.

By this arrangement, a new way of suspending the container is created where simple mounting is achieved and where simultaneously there is a useful volume corresponding to that which is known from the existing embodiment according to the above second principle. By using a hooking means on a vertical side of the container, it is possible to utilise all the height available under a platform body or the like as the container may be mounted with its upper side in level with the underside of the platform. The mounting occurs in a simple way by suspending the container on the mutually engaging hooking means. Then the container is pivoted by its own weight to its mounted position where the surface interacting with the projecting edge is provided by a recess at the upper or lower end of the support member. Alternatively, the surface may be provided on a screw or corresponding fastening means connected with the support member. Hereby is safeguarded that the container does not fall off due to jolting of the vehicle. In a simple way, this is further ensured by means of a single bolt through the projecting edge and the support member.

According to a specific embodiment of the invention, the arrangement is peculiar in that the hooking means comprise a quadrangular section fastened at an upper end of the vertical support member and engaging a U-section on the container with the open part of the U facing downward, the support member comprising one or more juxtaposed vertical U-sections that have a downwardly facing surface at each their lower end, the surface formed in a recess arranged to receive an angle bar which is fastened at the bottom of the container. The arrangement may be further peculiar in that the vertical U-sections are fastened with screw bolts on a C-shaped side member, and that one leg of the angle bar is welded onto the bottom of the container, and that the other leg, which protrudes outside the vertical side, is brought into contact with the bottom of the recess and is fastened with screw bolts to the vertical U-sections. This embodiment is particularly simple to make and to mount in connection with metal containers such a fuel tanks.

According to a further embodiment, the arrangement is peculiar in that the hooking means comprise quadrangular section fastened at a lower end of the vertical support member and engaging a U-section on the container with the open part of the U facing downward, the support member comprising one or more juxtaposed, vertical C-sections that each have a hole formed in the upper part of the side member and in line with a hole in a plate fastened at the top of the container, and that a screw bolt through the holes fastens the container. This may be an advantage when the hooking means are desired to be at the lower end of the vertical support sections.

Alternatively, the arrangement may be peculiar in that the hooking means comprise a V-shaped groove provided at an upper end of the vertical support member and engaging a V-shaped section with a downward facing edge, the support member comprising one or more juxtaposed vertical U-sections each having a surface at their downward facing ends formed in a recess which is arranged for receiving an angle bar fastened at the bottom of the container. This embodiment causes that the hooking means automatically slide into engagement and simultaneously enable a wedge action as the triangular section slides down into the groove.

Other embodiments of the hooking means are possible. It is only important to ensure that the hooking means are disposed on the side member and the container so that the upper side of the container and the side member are largely in the same horizontal plane when the hooking means are engaged. Also, it is advantageous if the hooking means are elongate and have a length corresponding to the length of the mentioned vertical side of the container. Hereby a great load may be carried by the hooking means.

The invention will now be explained in more detail with reference to the accompanying drawing where:
- Fig. 1: shows a partial section through a first embodiment of an arrangement according to the invention,
- Fig. 2: shows a view corresponding to Fig. 1 for illustrating a further embodiment of an arrangement according to the invention,
- Fig. 3: shows a partial view for illustrating a further embodiment of the invention with a suspension arrangement based on the same principle as illustrated in Fig. 1, and
- Fig. 4: shows a partial view for illustrating a further embodiment of the invention with a suspension arrangement based on the same principle as illustrated in Fig. 2.

In the subsequent Figures, corresponding or identical elements are provided with the same reference numbers, and no detailed explanation in connection with each single Figure will be given.

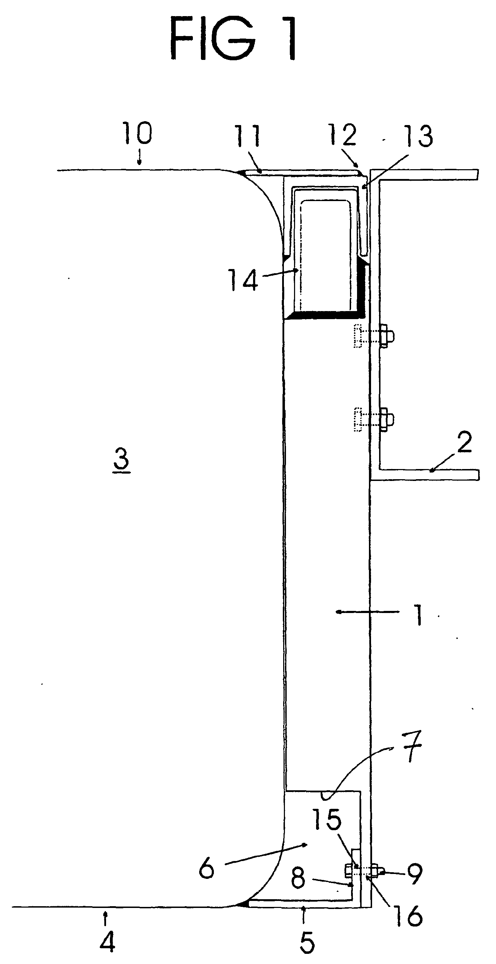

The arrangement shown in Fig. 1 comprises a vertical U-section 1 screwed onto a lorry side member 2 as in the case of the prior art arrangements. At the bottom 4 and in longitudinal direction of the container, which is shown as a tank 3, an angle bar 5 is welded on. This angle bar engages a recess in the U-section 1. Hereby is ensured that the tank cannot fall off as the recess has a downwardly facing surface 7 covering a vertical leg 8 of the angle bar 5. The angle bar may be screwed into the U-section by means of bolts 9 for further safeguarding against the tank falling off during driving.

At the top 10 of the tank 3 is welded a reinforcing plate 11 which at its outer end 12 is provided with a U-section 13 extending along the tank. This U-section grips as a hook down on a support section 14 fastened at the upper side of the U-section 1.

With this construction is achieved an easy mounting as the tank is hooked firmly on the U-section 13 over the support section 14. Then the tank is aligned in longitudinal direction until a hole 15 in the welded angle bar 5 is opposite to a corresponding hole 16 in the U-section 1. Then one or two bolts 9 may easily be used for clamping the angle bar and the U-section.

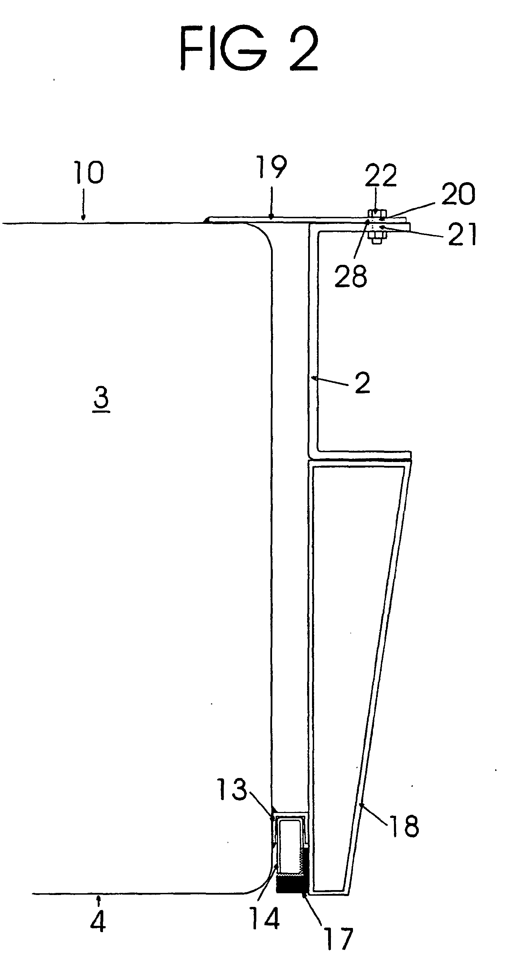

In Fig. 2 is shown an alternative embodiment of the arrangement. This embodiment differs from the embodiment in Fig. 1 by the horizontal U-section 13 and the support section 14 being disposed at the bottom 4 of the tank 3 as the support section 14 via an angular bracket 17 is mounted at the lower end of a U-section 18 which is shown with a downwardly directed tapering and is appearing at the underside of the side member 2. The mounting may occur by screw bolting, welding, or in other ways.

At the top 10 of the tank is welded a connecting plate 19 extending beyond the side member 2. The connecting plate is provided with a hole 20 which is brought to a position at a hole 21 in the side member 2 after which a bolt 22 is used for fastening the tank.

In this situation, the tank is thus placed by hooking the U-section 13 over the support section 14 and then pivot the upper part of the tank inwards so that the plate 19 is over the side member 2. Then the tank is aligned longitudinally until the holes 20 and 21 are corresponding with each other.

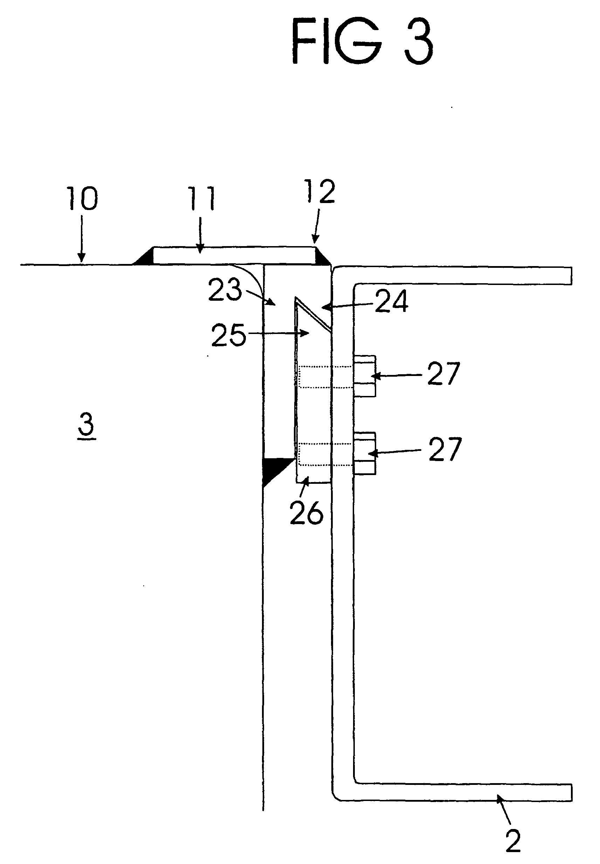

In Fig. 3 is shown a partial illustration of a further embodiment. Only the upper part of the tank is shown as the lower part of the tank will correspond to the embodiment shown in Fig. 1. This embodiment differs by reinforcing plate 11 being provided with a section 23 with a profiled V-shaped edge 24 at its outer end. This V-shaped edge engages a corresponding V-shaped groove 25 provided at the upper side of a section 26 which is fastened to the side member 2 by means of bolts 27. Thereby the V-shaped part 24 is easily hooked and brought into engagement with the V-shaped groove 25 and will automatically be leading into abutment against the side member 2. An angle bar 5 (see Fig. 1) ensures that the tank does not fall off during driving.

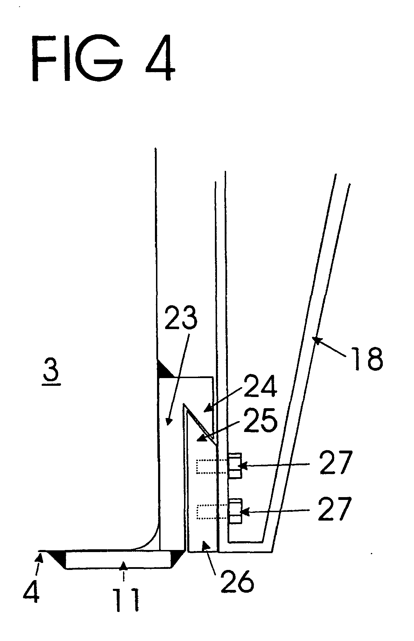

In Fig. 4 is shown a further embodiment. Here is shown hooking elements corresponding to those shown in Fig. 3. However, here they are provided at the bottom 4 of the tank 3. At the upper end of the tank there is provided a plate corresponding to the plate 19 in Fig. 2 for similar fastening of the tank on the side member 2.

In Fig. 2, the safeguarding of the tank against falling off during driving is provided by means of the bolt 20. Thus the underside 28 of the bolt head will form a surface for engaging the connecting plate 19. As alternative to the use of holes 20 in the plate 19 and the side member 2 there may be used an elongate opening in the side of the plate 19 and/or the side member 2. A corresponding safety device (not shown) is used in the embodiment shown in Fig. 4.

## Claims

1. A suspension arrangement to suspend a container (3) on a side member (2) of a vehicle, preferably a lorry, the arrangement comprising a largely vertical support member (1,18) mounted on the side member and including means to support the container, **characterised in that** the supporting means comprise a hooking means (14,26) disposed on said side member (2) and engaging a complementary hooking means (13,23) which is mounted at a vertical side of the container, whereby the two mutually engaging hooking means comprise an upwardly facing groove and a downwardly facing profiled edge arranged to engage the groove, and that at the vertical side of the container there is provided a projecting edge (8,19) extending largely in parallel with the hooking means, and which may pivot into engagement behind a downwardly facing surface (7,28) connected with the support member (1,18) by pivoting the container (3) about the mutually engaging hooking means (13,23;14,26).

2. An arrangement according to claim 1, wherein the hooking means (13,14) comprise a quadrangular section (14) fastened at an upper end of the vertical support member (1) and a U-section (13) on the container with the open part of the U facing downward, whereby said quadrangular section engages said U-section; the support member comprising one or more juxtaposed vertical U-sections (1) that have a downwardly facing surface (7) at each their lower end, the surface (7) formed in a recess (6) arranged to receive an angle bar (5) which is fastened at the bottom (4) of the container (3).

3. An arrangement according to claim 2, wherein the vertical U-sections (1) are fastened with screw bolts on a C-shaped side member (2), and that one leg of the angle bar (5) is welded onto the bottom (4) of the container, and that the other leg (8), which protrudes outside the vertical side, is brought into contact with the bottom of the recess (6) and is fastened with screw bolts to the vertical U-sections (1).

4. An arrangement according to claim 1, wherein the hooking means (13,14) comprise quadrangular section (14) fastened at a lower end of the vertical support member (18) and a U-section (13) on the container with the open part of the U facing downward, whereby said quadrangular section engages said U-section; the support member (18) comprising one or more juxtaposed, vertical C-sections (18) that each have a hole (21) formed in the upper part of the side member (2) and in line with a hole (20) in a plate (19) fastened at the top (10) of the container, and that a screw bolt (22) through the holes (20,21) fastens the container (3).

5. An arrangement according to claim 1, wherein the hooking means comprise a V-shaped groove provided at an upper end of the vertical support member (1) and engaging a V-shaped section with a downward facing edge, the support member comprising one or more juxtaposed vertical U-sections (1) each having a surface (7) at their downward facing ends formed in a recess (6) which is arranged for receiving an angle bar (5) fastened at the bottom (4) of the container (3).

6. An arrangement according to any preceding claim, wherein the hooking means (13,23;14,26) are provided on the side member (2) and the container (3) so that the upper side of the container and the side member are largely in the same horizontal plane when the hooking means are engaged.

7. An arrangement according to any preceding claim, wherein the container (3) is a fuel tank.

8. An arrangement according to any of claims 1-6, wherein the container (3) is a storage box, such as toolbox, refrigerator or similar.

9. An arrangement according to any preceding claim, wherein the hooking means (13,23; 14,26) are elongate and have a length corresponding to the length of the vertical side of the container.

## Patentansprüche

1. Aufhängungsanordnung zum Aufhängen eines Behälters (3) an einem Seitenelement (2) eines Fahrzeugs, vorzugsweise eines Lastkraftwagens, wobei die Anordnung ein im Wesentlichen vertikales Halteelement (1, 18) aufweist, das an dem Seitenelement angebracht ist und Mittel umfasst, um den Behälter zu halten,
**dadurch gekennzeichnet, dass** die Haltemittel ein Hakenmittel (14, 26) umfassen, das an dem Seitenelement (2) angeordnet ist und mit einem komplementären Hakenmittel (13, 23) in Eingriff ist, das an einer vertikalen Seite des Behälters angebracht ist, wobei die zwei miteinander in Eingriff befindlichen Hakenmittel eine nach oben weisende Nut und eine nach unten weisende Profilkante, die so beschaffen ist, dass sie mit der Nut in Eingriff gelangen kann, umfassen, und dass an der vertikalen Seite des Behälters eine vorstehende Kante (8, 19) vorgesehen ist, die im Wesentlichen parallel zu den Hakenmitteln verläuft und in einen Eingriff hinter einer mit dem Halteelement (1, 18) verbundenen, nach unten weisenden Oberfläche (7, 28) schwenken kann, indem der Behälter (3) um die miteinander in Eingriff befindlichen Hakenmittel (13, 23; 14, 26) geschwenkt wird.

2. Anordnung nach Anspruch 1, bei der die Hakenmittel (13, 14) einen vierseitigen Querschnitt (14), der an einem oberen Ende des vertikalen Halteelements (1) befestigt ist, und einen U-förmigen Abschnitt (13) am Behälter, dessen offener Abschnitt nach unten weist, umfassen und der vierseitige Abschnitt mit dem U-Abschnitt in Eingriff ist; wobei das Halteelement einen oder mehrere nebeneinander liegende vertikale U-Abschnitte (1) aufweist, die an ihrem unteren Ende eine nach unten weisende Oberfläche (7) besitzen, wobei diese Oberfläche (7) in einer Aussparung (6) ausgebildet ist, die so beschaffen ist, dass sie eine Winkelstange (5) aufnimmt, die am Boden (4) des Behälters (3) befestigt ist.

3. Anordnung nach Anspruch 2, bei der die vertikalen U-Abschnitte (1) mit Gewindebolzen an einem C-förmigen Seitenelement (2) befestigt sind und ein Schenkel der Winkelstange (5) auf den Boden (4) des Behälters geschweißt ist und der andere Schenkel (8), der außerhalb der vertikalen Seite vorsteht, in Kontakt mit dem Boden der Aussparung (6) gebracht ist und mit Gewindebolzen an den vertikalen U-Abschnitten (1) befestigt ist.

4. Anordnung nach Anspruch 1, bei der die Hakenmittel (13, 14) einen vierseitigen Querschnitt (14), der an einem unteren Ende des vertikalen Halteelements (18) befestigt ist, und einen U-förmigen Abschnitt (13) an dem Behälter, dessen offener Teil nach unten weist, umfassen und der vierseitige Abschnitt mit dem U-Abschnitt in Eingriff ist; wobei das Halteelement (18) einen oder mehrere nebeneinander liegende vertikale C-Abschnitte (18) aufweist, die jeweils ein im oberen Teil des Seitenelements (2) gebildetes Loch (21) besitzen, das auf ein Loch (20) in einer an der Oberseite (10) des Behälters befestigten Platte (19) ausgerichtet ist, und dass ein durch die Löcher (20, 21) verlaufender Gewindebolzen (22) den Behälter (3) befestigt.

5. Anordnung nach Anspruch 1, bei dem die Hakenmittel eine V-förmige Nut umfassen, die an einem oberen Ende des vertikalen Halteelements (1) vorgesehen ist und mit einem V-förmigen Abschnitt mit einer nach unten weisenden Kante in Eingriff ist, wobei das Halteelement einen oder mehrere nebeneinander liegende, vertikale U-Abschnitte (1) umfasst, wovon jeder an seinen nach unten weisenden Enden eine Oberfläche (7) besitzt, die in einer Aussparung (6) ausgebildet ist, die so beschaffen ist, dass sie eine Winkelstange (5) aufnehmen kann, die am Boden (4) des Behälters (3) befestigt ist.

6. Anordnung nach einem der vorhergehenden Ansprüche, bei der die Hakenmittel (13, 23; 14, 26) an dem Seitenelement (2) und an dem Behälter (3) vorgesehen sind, so dass die Oberseite des Behälters und das Seitenelement im Wesentlichen in derselben horizontalen Ebene liegen, wenn die Hakenmittel in Eingriff sind.

7. Anordnung nach einem vorhergehenden Anspruch, bei der der Behälter (3) ein Kraftstofftank ist.

8. Anordnung nach einem der Ansprüche 1-6, bei der der Behälter (3) ein Aufbewahrungskasten wie etwa ein Werkzeugkasten, ein Kühlgerät oder dergleichen ist.

9. Anordnung nach einem vorhergehenden Anspruch, bei der die Hakenmittel (13, 23; 14, 26) lang gestreckt sind und eine Länge besitzen, die der Länge der vertikalen Seite des Behälters entspricht.

## Revendications

1. Dispositif de suspension pour suspendre un récipient (3) sur un longeron (2) d'un véhicule, de préférence un camion, le dispositif comprenant un organe d'appui grosso modo vertical (1,18) monté sur le longeron et comportant des organes pour supporter le récipient, **caractérisé en ce que** les organes de support comprennent un organe d'accrochage (14, 26) disposé sur le longeron (2) et s'engageant dans un organe d'accrochage complémentaire (13, 23) qui est monté sur un côté vertical du récipient, les deux organes d'accrochage conjugués comportant une rainure s'étendant vers le haut et un bord profilé s'étendant vers le bas destiné à engager la rainure, et que sur le côté vertical du récipient un bord profilé (8, 19) est prévu s'étendant grosso modo parallèlement à l'organe d'accrochage, et qui peut pivoter en engrenage derrière une surface s'étendant vers le bas (7,28) liée à l'organe de support (1, 18) en pivotant le récipient (3) autour des organes d'accrochage conjugués (13, 23; 14, 26).

2. Dispositif selon la revendication 1, où les organes d'accrochage (13, 14) comportent une section quadrangulaire (14) fixée à une extrémité supérieure de l'organe de support vertical (1) et une section en U (13) sur le récipient avec la partie ouverte de l'U s'étendant vers le bas, ladite section quadrangulaire engageant ladite section en U, l'organe de support comprenant une ou plusieurs sections en U verticales adjacentes (1) qui présentent une surface s'étendant vers 1e bas (7) à leur extrémité inférieure, la surface (7) formée dans une niche (6) destiné à recevoir un fer cornière (5) qui est fixé au fond (4) du récipient (3).

3. Un dispositif selon la revendication 2, où les sections en U verticales (1) sont fixées avec des boulons sur un longeron en forme de C (2) et que l'une branche du fer cornière (5) est soudée au fond (4) du récipient, et que l'autre branche (8) qui protude à l'extérieur du coté vertical, est mise en contact avec le fond de la niche (6) et est fixée avec des boulons sur les sections en U verticales (1).

4. Dispositif selon la revendication 1, où les organes d'accrochage (13, 14) comportent une section quadrangulaire (14) fixée à une extrémité inférieure de l'organe de support vertical (18) et une section en U (13) sur le récipient avec la partie ouverte de l'U étendant vers le bas, ladite section quadrangulaire engageant ladite section en U, l'organe de support (18) comprenant une ou plusieurs sections en C verticales adjacentes (18) qui chacune présente un trou (21) formé dans la partie supérieure du longeron (2) et aligné avec un trou (20) dans une plaque (19) fixée au dessus (10) du récipient, et qu'un boulon (22) à travers des trous (21, 20) fixe le récipient (3).

5. Dispositif selon la revendication 1, où les organes d'accrochage comportent une rainure en forme de V prévue à une extrémité supérieure de l'organe d'appui et engageant une section en forme de V avec un bord s'étendant vers le bas, l'organe d'appui comportant une ou plusieurs sections en U verticales (1) chacune possédant une surface (7) à leur extrémité s'étendant vers le bas formé dans une niche (6) qui est destinée à recevoir un fer cornière (5) fixé au fond (4) du récipient (3).

6. Dispositif selon l'une quelconque des revendications précédentes, où les organes d'accrochage (13, 23; 14, 26) sont prévus sur le longeron (2) et le récipient (3) de sorte que la face supérieure du récipient et le longeron sont grosso modo dans le même plan horisontal lorsque les organes d'accrochage sont engagés.

7. Dispositif selon l'une quelconque des revendications précédentes, où le récipient (3) est un réservoir d'essence.

8. Dispositif selon l'une quelconque des revendications 1 à 6, où le récipient (3) est une boîte de stockage, comme par exemple une boîte de manutention, réfrigérateur ou analogues.

9. Dispositif selon l'une quelconque des revendications précédentes, ou les organes d'accrochage (13,23; 14,26) sont allongés et ont une longueur correspondant à la longueur de longeron du récipient.
